(19) Europäisches Patentamt
European Patent Office
Office européen des brevets

(11) **EP 1 773 493 B1**

(12) **EUROPEAN PATENT SPECIFICATION**

(45) Date of publication and mention
of the grant of the patent:
**10.12.2008 Bulletin 2008/50**

(51) Int Cl.:
**B01L 3/00** (2006.01)    **G01N 30/38** (2006.01)
**G01N 21/03** (2006.01)

(21) Application number: **04766291.1**

(22) Date of filing: **22.07.2004**

(86) International application number:
**PCT/EP2004/051577**

(87) International publication number:
**WO 2006/007878 (26.01.2006 Gazette 2006/04)**

(54) **MICROFLUIDIC ARRANGEMENT FOR MICROFLUIDIC OPTICAL DETECTION**

MIKROFLUIDANORDNUNG FÜR OPTISCHE MIKROFLUIDERFASSUNG

AGENCEMENT MICROFLUIDIQUE POUR DETECTION OPTIQUE MICROFLUIDIQUE

(84) Designated Contracting States:
**CH DE FR GB LI**

(43) Date of publication of application:
**18.04.2007 Bulletin 2007/16**

(73) Proprietor: **Agilent Technologies, Inc.**
**Santa Clara, CA 95051 (US)**

(72) Inventors:
• **BÄUERLE, Martin**
**77830 Bühlertal (DE)**
• **CHOIKHET, Konstantin,**
**Agilent Technologies**
**76337 Waldbronn (DE)**
• **PRECKEL, Tobias,**
**Agilent Technologies**
**76337 Waldbronn (DE)**
• **ZIMMERMANN, Hans-Peter,**
**Agilent Technologies**
**76337 Waldbronn (DE)**

(74) Representative: **Barth, Daniel Mathias**
**Agilent Technologies Deutschland GmbH**
**Patentabteilung**
**Herrenberger Strasse 130**
**71034 Böblingen (DE)**

(56) References cited:
• **DESMET G ET AL: "Shear-flow-based chromatographic separations as an alternative to pressure-driven liquid chromatography" JOURNAL OF CHROMATOGRAPHY A, ELSEVIER SCIENCE, NL, vol. 948, no. 1-2, 1 March 2002 (2002-03-01), pages 19-34, XP004339484 ISSN: 0021-9673**
• **CLICQ D ET AL: "Axial dispersion measurements of Bodenstein >100,000 flows through nano-channels etched on flat surfaces" CHEMICAL ENGINEERING SCIENCE, OXFORD, GB, vol. 59, no. 13, July 2004 (2004-07), pages 2783-2790, XP004515100 ISSN: 0009-2509 -& XP002321617 Retrieved from the Internet: URL:http://www.sciencedirect.com/science?_ob=ArticleURL&_udi=B6TFK-4CHRW4X-2&_user=9 87766&_coverDate=07%2F31%2F2004&_alid=2575 98855&_rdoc=1&_fmt=summary&_orig=search&_c di=5229&_sort=d&_st=0&_docanchor=&_acct=C0 00049880&_version=1&_urlVersion=0&_userid= 987766&md5=4818e21b33f6b3aaa217b792e3d8 b8c 0> [retrieved on 2005-03-17]**
• **VERVOORT N ET AL: "Experimental Van Deemter plots of shear-driven liquid chromatographic separations in disposable microchannels" JOURNAL OF CHROMATOGRAPHY A, ELSEVIER SCIENCE, NL, vol. 987, no. 1-2, 14 February 2003 (2003-02-14), pages 39-48, XP004405803 ISSN: 0021-9673**

EP 1 773 493 B1

**Description**

BACKGROUND ART

The present invention relates to optical detection units in communication with microfluidic devices.

In sample analysis instrumentation, and especially in separation systems such as liquid chromatography and capillary electrophoresis systems, smaller dimensions generally result in improved performance characteristics and at the same time result in improved preparation and analysis efficiency due to time saving based on short residence times in the system and reduced consumption of solvents and additives. Miniaturized separation systems enable scientists to obtain research results despite of using very small volumes of rarely available or difficult to prepare chemical or biological materials.

Analysis of a substance being separated or prepared in the miniaturized column device is conducted while the substance is passing through the column. Preferably, an optical detection technology is selected: UN/Vis, fluorescence, refractive index (RI), Raman and spectroscopic technologies or the like.

Several miniaturized systems have been described in the art aiming to provide miniaturized microfluidic devices. See U.S. Pat. No. 6,033,628 to Swedberg et al. Herein a combination of a device material providing chemical inertness and an optical detection means in compact form coupled with the miniaturized column device is disclosed.

U.S. Pat. No. 6,093,362 to Kaltenbach et al. discloses an optical detection means ablated in a substantially enhanced detection path length on which the reliability of optical detection results depend. Suggestions how to optimize the pathlength can be found in U.S. Pat. No. 5,571,410 to Swedberg et al., and in U.S. Pat. No. 5,500,071 to Kaltenbach et al.

A microfluidic detector cell is known from US 5,499,503 A. Microfluidic systems with detection systems are further known from WO 02/103323 A2.

DISCLOSURE OF THE INVENTION

It is an object of the invention to provide an improved optical detection on microfluidic arrangements according to claim 1. Preferred embodiments are shown by the dependent claims.

Embodiments of the present invention address the aforementioned needs in the art and provide a microfluidic arrangement having an optimized path length of the optical detection path.

Embodiments of the invention show a microfluidic arrangement combined of a polymeric device to carry out a desired chemical, physical or biological process, which stands in fluidic communication with a second component serving as part of an optical device. An improvement of the present invention is an optical detection unit being the main component of the optical device, providing an extension of light path or detection path, respectively, permitting to obtain a reliable optical detection.

In a first embodiment of the invention the microfluidic arrangement is composed in that the surface of a microfluidic device with a planar geometry is coupled with the bottom surface of an optical detection unit of an optical device. The microfluidic device comprises a channel carrying the fluid being analyzed, which channel stands in fluidic communication with a channel of the optical detection unit, providing a detection path along its longitudinal axis. After having been detected, the fluid flows back into the substrate.

In a second embodiment of the invention the microfluidic arrangement is substantially composed as in the embodiment depicted before, but the fluid is permitted to flow into the channel of another substrate after having passed the channel of the optical detection unit.

In a third embodiment of the present invention the microfluidic arrangement is substantially composed as in the first embodiment, but the detection path is arranged normal to the channel being comprised in the optical detection unit.

In a fourth embodiment of the present invention the microfluidic arrangement is composed of a microfluidic device with a planar geometry comprising a channel, which opens to the top and to the bottom surface of the substrate; the top surface being coupled with the bottom surface of an optical detection unit of an optical device. In this case the optical detection unit serves as a spacer between the substrate and coupling parts of the optical device.

BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawings. Features that are substantially or functionally equal or similar will be referred to with the same reference signs. The Figures show:

FIG. 1a a schematic cross sectional side view of an optical detection unit,

FIG. 1b a schematic partial cross sectional side view of a microfluidic device,

FIG. 1c a schematic cross sectional side view of a microfluidic arrangement, comprising the optical detection unit of FIG.1a, a light emitting source, a light receiver and the microfluidic device partially shown in FIG.1b,

FIG. 1d a schematic cross sectional side view of an optical device with an optical detection path which is aligned with the longitudinal axis of the optical detection unit,

FIG.2 a schematic cross sectional side view of a microfluidic arrangement with an optical detection unit being in active communication with two partially shown microfluidic devices,

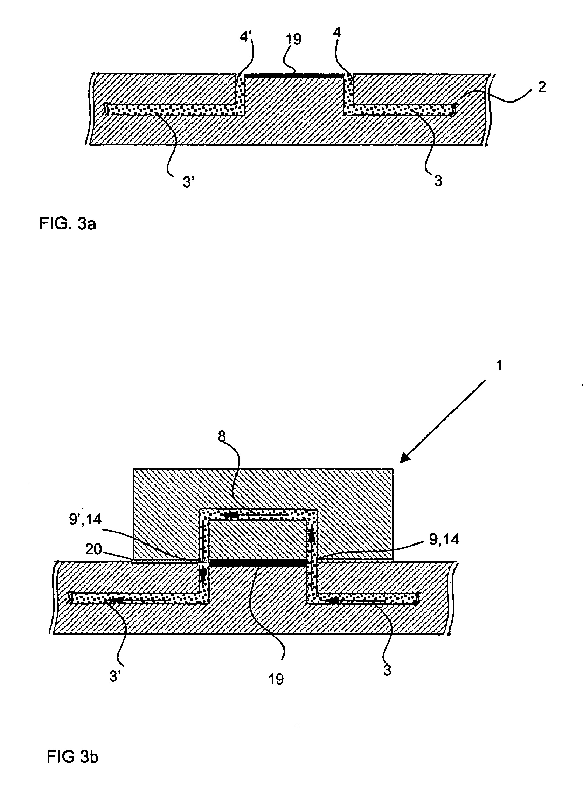

. FIG. 3a a schematic partial cross sectional side view of a microfluidic device with a partial surface coating,

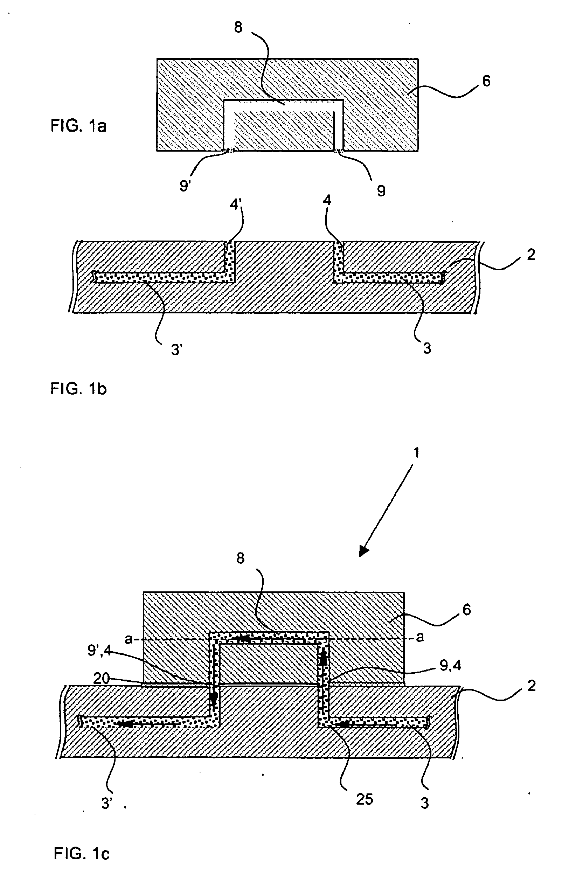

FIG.3b a schematic cross sectional side view of a microfluidic arrangement, comprising the optical detection unit of FIG. 1a and the microfluidic device with a partial surface coating, as shown in FIG. 3a,

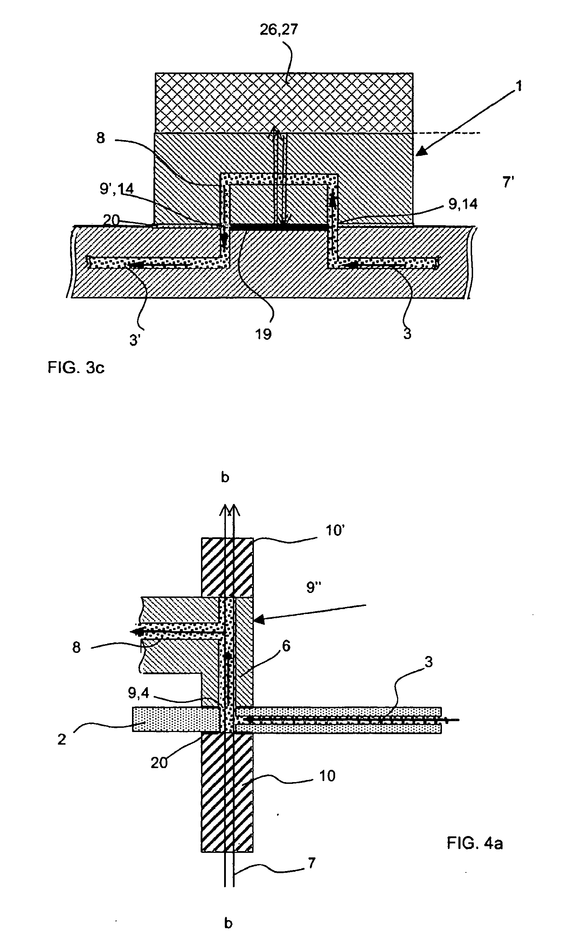

FIG.3c a schematic cross sectional side view of the microfluidic arrangement of FIG. 3b, and light emitting source and light receiver, the light detection path being arranged normal to the longitudinal axis of the optical detection unit,

FIG. 4a a schematic cross sectional side view of a microfluidic device being coupled with another embodiment of the optical detection unit, herein serving as spacer between the microfluidic device and light coupling devices,

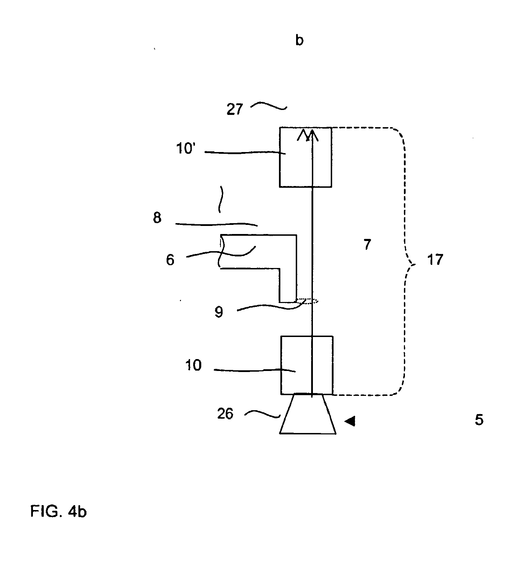

FIG. 4b shows only the optical device of FIG. 4a and additionally a light emitting and receiving device, clearly pointing out the extension of the optical detection path.

DETAILED DESCRIPTION OF DRAWINGS

Analysis of the substance being separated or prepared in the miniaturized column device is conducted while the substance is passing through the column. Preferably, an optical detection technology is selected such as UV/Vis, fluorescence, refractive index (RI), Raman and spectroscopic technologies or the like.

In order to produce reliable results several requirements have to be considered:

The device material must comprise optical properties permitting to carry out the desired technology, effects like self emittance, self fluorescence, respectively, absorption of light etc. must be excluded.

At the same time the miniaturized analysis device ought to be made from a chemical inert material, not showing reactivity of the device material with the analysis reagents, to name the dissolution of silicon dioxide devices in basic conditions. Accordingly, it's almost impossible to find a material that meets as well the optical as the chemical requirements.

Furthermore it has to be taken into account that in conventional capillary electrophoresis (CE) technology the optical detection is generally performed on-columns by a single pass detection technique, wherein electromagnetic energy is passed through the sample, the light beam traveling normal to the capillary axis and crossing the capillary only a single time. Accordingly, the detection path length is depending on the diameter of the capillary or column, channel, respectively.

Considering the *Law of Lambert and Beer* it can be seen clearly that the intention to minimize the column device, including minimization of the diameter of the capillary, leads to a reduction of the light path and therefore to an decreased precision of the results.

The universal formula of the law gives the change in intensity di, of light having a wavelength λ, in dependency of an absorbing species across a segment having a thickness x

$$\frac{di}{i} = -\alpha_\lambda \cdot c \cdot dx \qquad Eq.\ 1$$

with α = proportionality factor, depending on c = usually concentration (mol/l); may as well be another chemical property not directly depending on concentration.

Integrating over the thickness x of the segment gives the change of the intensity of the light $I_0$ entering the segment x - which herein is the fluid flowing through the capillary - and the light I exiting the capillary. Assuming that the absorbing species is homogeneously distributed in the sample and solving the integral leads to:

$$I = I_0 \cdot e^{\alpha \cdot d} \qquad Eq.\ 2.$$

Transformation gives the absorbance A which is dimensionless:

$$A = \lg \frac{I_0}{I} = -\lg T = \varepsilon_\lambda \cdot c \cdot d \qquad\qquad Eq.\ 3$$

with

$$\varepsilon_\lambda = \frac{\alpha_\lambda}{\ln 10}, \ \varepsilon = \text{the molar absorptivity (l/mol·cm)} \qquad Eq.\ 5.$$

It can be seen that the absorbance increases linearly with the pathlength, which is the parameter to be optimized.

Since the absorption is correlated with transmission T and reflection R according to the following relationship

$$1 = A + R + T \qquad\qquad Eq.\ 6,$$

wherein "1" is 100 % of the light entering the segment dx, it can be readily understood that an increased pathlength of the light affects each optical detection based on absorption, transmission or reflection measurements.

Before the invention is described in detail, it is to be understood that the terminology used herein is for purposes describing particular embodiments only and it is not intended to be limiting. It must be noted that, as used in the specification and the appended claims, the singular forms of "a", "an", and "the" include plural referents until the context clearly dictates otherwise. Thus, for example, the reference to "a detection device" includes two or more such devices; "a channel" or "the channel" may as well include two or more channels where it is reasonable in the sense of the present invention.

In this specification and in the claims which follow, reference will be made to the following terms which shall be defined to have the herewith explained meanings:

The term "microfluidic device" is used herein to refer to any material which is light-absorbing and capable of being ablated, particularly laser-ablated, and which is not silicon or a silicon dioxide material such as quartz, fused silica or glass like borosilicates. Accordingly, miniaturized column devices or devices comprising channels for separation or preparative purposes are formed herein using suitable substrates such as laser ablatable polymers (including polyimides and the like) and ceramics (including aluminum oxides and the like), thus being "microfluidic devices". Further, miniaturized column devices are formed herein using composite substrates such as laminates.

A "laminate" refers to a composite material formed from several different bonded layers of the same or different materials.

As used herein, an "optical detecting device" refers to any means, structure or configuration that allows one to interrogate a sample within a definite compartment using optical analytical techniques known in the art. Thus, an "optical detecting device" comprises a light emitting source and a means to receive light being reflected or transmitted by the sample.

By the arrangement of a light emitting source and a receiver (means for receiving radiation) an "optical detection path" is formed, permitting electromagnetic radiation to travel from the light emitting source to the receiver, thereby traversing a sample being present within a compartment on the optical detection path. Thus, a variety of optical detection techniques can be readily interfaced with the part of the optical detection path including, but not limited to, UV/VIS, Near IR, fluorescence, refractive index (RI) and Raman index.

The "optical detection unit" is that component of the optical detection device that surrounds the compartment or part, respectively, of the optical detection path that contains the sample while it is traversed by the electromagnetic radiation.

In the following, the term "fluid" is used synonymously to "sample" since the focus is laying onto the analysis of fluid media no matter if they are subjected to a separation process or to a preparative process. The fluid may contain particles.

The term "channel," refers to any passage in the substrate that is suitable for carrying fluids. Depending on its specific use, the channel may serve as a separating device, which filled with a packing or the like, being a column then, or it, may be of a very small size, being a capillary then.

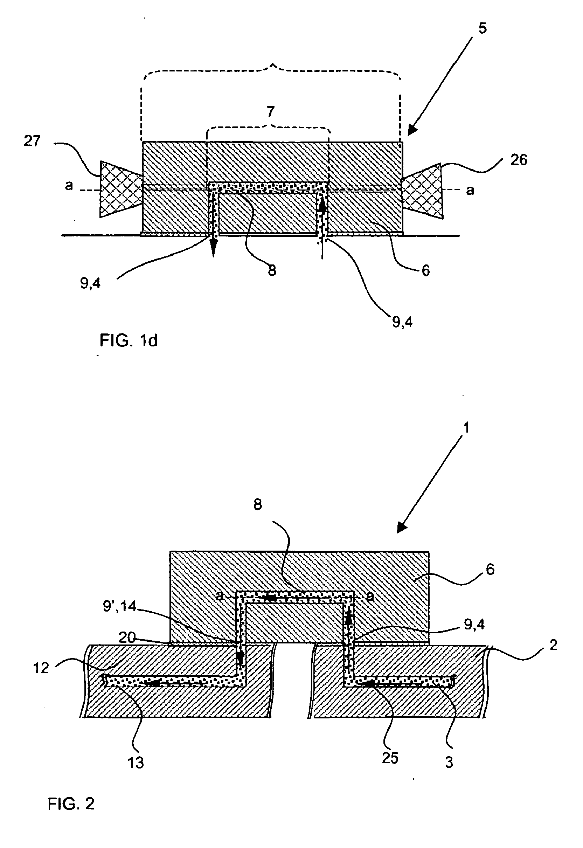

Referring now to **FIG. 1a,** an optical detection unit 6 can be seen, which is the main component of an optical device 5, shown in **FIG 1d**. It includes at least one channel 8 having a longitudinal axis a-a with a first opening 9 and a second opening 9', both opening to the bottom surface of the optical detection unit 6, which faces the upper surface of the microfluidic device 2 shown in **FIG. 1b.**

In **FIG. 1c** the microfluidic arrangement 1 is shown, being comprised of the microfluidic device 2 of **FIG. 1b,** which herein has a channel 3 with an opening 4 and another channel 3' with an opening 4', both opening to the upper surface of the substantially planar microfluidic device 2. As can be seen, the microfluidic device 2 is coupled with the optical device 6 in a position performing an overlapping of the openings 4 and 9, thus permitting a fluid being contained in the channel 3 to pass the opening 4 in order to flow via the opening 9 into the channel 8 of the optical detection unit 6. Thus, a fluid communication between optical device 6 and microfluidic device 2 is obtained.

In FIGS. 1b,c (and 3a,b,c), the fluid is flowing back into the microfluidic device 2 by passing a second opening 9' of the channel being comprised in the optical detection unit 6, which is exactly congruent with the opening 4' of the channel 3'. The channel 3' could be seen as a continuation of the channel 3. Thus, a process that is not already finished may be continued. The fluid flow is driven by a moving force as it is known in the art; the moving force shall not be focused closer herein.

As it is depicted in **FIG. 1d,** the.optical device provides a part 7 of an optical detection path 17 along the longitudinal axis a-a. With respect to equations 1-6, the precision of results obtained by optical detection techniques which base on the traversing of electromagnetic radiation through a sample is the better the longer the optical path is; accordingly one can design an optical detection unit with an appropriate length of the path 7, depending on the requirements of the fluid to detect.

As can be seen in **FIG.1d,** the electromagnetic radiation applied in the setting of FIG. 1c is emitted by a light emitting source 26 and directed along the optical detection path 17, traversing the fluid that flows through the channel 8 along the longitudinal axis a-a and is then received by the receiver 27. Accordingly, the extension of the relevant part 7 of the optical detection path 17 depends of the length of the channel 8, which can be considered when this component is manufactured und thus can be adapted custom tailored with respect to the specific needs of the optical detection technique to be applied. It must be pointed out that independent from the extension of the relevant part 7 of the detection path 17 any effects basing on the optical properties of the microfluidic device 2 should be excluded. This advantage characterizes each of the embodiments described herein.

The microfluidic device of the embodiment shown in **FIGS.1a-1c** is only shown partially; it could be sized large enough to include a plurality of channels.

Since the microfluidic device 2 needs only to be detachably coupled with the optical detection unit 6 during the operation of the optical detection, the optical device 5 is available for numerous measurements. Accordingly, a microfluidic device might be detached after a detection operation has been performed, subsequently it could be coupled in another position, creating a new passageway between the opening 9 and an opening of another channel that is comprised in the substrate. (This is not shown in the drawings.)

**FIG. 2** shows an embodiment pointing out that the fluid may be lead a second microfluidic device 12, having a channel 13 with an opening 14, which opens to the surface of the second microfluidic device 12. The opening 14 is positioned that way, that it overlaps the second opening 9' of the channel 8 of the optical detection unit 6.

**FIGS. 3b and 3c** show a design wherein the optical detection path 17 is arranged normal to the channel 8 of the optical detection unit 6. The length of the part 7' of the optical detection path 17 may be extended by widening of the channel, which is not shown in the FIGS. In order to prevent disadvantageous influence of the microfluidic device 2, which is positioned in the optical detection path 17, a coating of the surface of the microfluidic device has to be provided. The coating may be partial, as can be seen in **FIGS. 3a, 3b and 3c**. It can be seen in **FIG. 3c** that the light emitting source 26 and the receiver 27, too, are arranged normal to the longitudinal axis a-a of the channel 8.

Taking into consideration that the optical device 5 including the optical detection unit 6 could be installed in an immobile apparatus, while the substrates containing fluids, which need to be analyzed, are mobile, just being coupled for the duration of the analysis, one is capable to design a most efficient detection apparatus and technique with the herein disclosed invention.

**FIG.4a** refers to a microfluidic device 2 wherein the opening 4 of the channel 3 extends from the upper surface to the bottom surface of the microfluidic device 2, thus the channel is being shaped like a "T". The passage formed from one to the other opening may be a through hole. The optical detection unit is coupled with an optical detection unit 6 having a channel 8 having three openings 9, 9' and 9" and being shaped like a "T", too. The microfluidic device 2 is positioned in a way that the opening 4 of the microfluidic device 2 interfaces the opening 9 of the optical detection unit 6, accordingly permitting a fluid being contained in the channel 3 to flow into the channel 8 via the passage constituted by the openings 4 and 9. The optical detection unit 6 is additionally coupled with a coupling device 10', being part of the optical detection unit 5. The microfluidic device 2, too, is attached at its bottom surface to a coupling device 10. Adjacent to the coupling device 10 a light emitting device 26 and adjacent to the coupling device 10' a receiver is installed; all of which being part of the optical detection unit 5.

In this arrangement, the optical detection unit 6 is a spacer between the microfluidic device 2 and the optical coupling device 10'. An axis b-b joins the centers of the openings 9", 9 and the center of the through hole of the microfluidic device. The optical detection path 17 is congruent with the axis b-b, beginning at the light emitting source 26 and ending at the receiver 27. In analogy to what has been shown in **FIG. 1d,** the spacer serves to extend the part 7 of the optical detection path 17 that traverses the fluid. Again, the precision of results obtained by an optical detection technique mentioned herein is based on the length of the optical path containing fluid.

The spacer offers a possibility to design or to extend the required optical detection path, more precisely the part 7 which can be filled with fluid, as can be seen in **FIG. 4b.** Furthermore, this design guarantees that there are no effects influencing the detection result which are based on material properties of the microfluidic device (2).

Any interfaces of channels, particularly those interfaces between the microfluidic device 2 and parts of the optical device, need to be positioned precisely, which means that openings being interconnected have to be brought in congruence. This could be facilitated by position holders as pins, for example, which can be mounted on the devices. Furthermore, the openings have to be fixed tightly one on another and they should be sealed with a high-pressure proof sealing in order to prevent leakage due to the pressure of the fluid. The pressure that has to be resisted may reach about 200 bar.

The optical detection unit 5 of any embodiment is preferably transparent, at least partially. It could be made from silicon or a silicon dioxide material such as quartz, fused silica or glass as like borosilicate or the like.

The method for optically detecting fluids being processed in microfluidic devices can be performed in any embodiment of a microfluidic arrangement according to the present invention. This requires attaching a microfluidic device to an optical device of the present invention. The operation of attaching the components of the microfluidic arrangement should be carried out precisely, guaranteeing an optimal overlapping of openings provided in the components facing each other. To optimize the connection or adhesion, respectively, a sealing should be applied.

The fluid that flows through the channel or channel system of the microfluidic device is now permitted to transit into the channel being comprised in the optical detection unit, thus passing the part of an optical detection path, which is traversed by electromagnetic radiation during the operation of detection.

The fluid can be moved with conventional moving means in order to obtain a definite flow through rate when the fluid passes the part of an optical detection path that is relevant for detection.

Leaving the channel of the optical detection unit, the fluid can be moved back into its microfluidic device of origin or into any other one, depending on the requirements of the process one is carrying out.

The light can be directed versus the probe directly or by coupling means; it can be directed along a longitudinal axis of the optical device or normal to it.

The present invention thus provides a microfluidic arrangement with, combining a microfluidic device material being chemically inert with respect to the processes to be performed with an optical device having optimal optical properties permitting to carry out the desired technology. It is furthermore most advantageous, that the material that is selected for the microfluidic device can be opaque while the material selected for the optical device is transparent, both combined together performing an extraordinary microfluidic arrangement, which fulfills the optical and chemical requirements. Additionally the microfluidic arrangement can be used flexible, allowing economic handling of the detection since the optical device can be used for a number of detections with differing microfluidic devices.

**Claims**

1.    Microfluidic arrangement (1) comprising:

at least one microfluidic device (2) having at least one first fluid channel (3) with an opening (4) to a surface of the microfluidic device (2),
an optical detection unit (6) of an optical device (5) providing at least a part (7,7') of an optical detection path (17) and comprising at least one fluid channel (8) with a first opening (9) opening to a surface of the optical detection unit (6),

wherein the surface of the optical detection unit (6) is facing the surface of the microfluidic device (2) when the at least one microfluidic device (2) is operatively coupled with the optical device (5), so that the at least one channel (8) of the optical detection unit (6) is in fluid communication with the at least one first channel (3) of the microfluidic device (2) by coupling the opening (4) of the at least one first channel (3) with the first opening (9) of the at least one channel (8) charaterized in that
the at least one microfluidic device (2) is detachably coupled with the optical detection unit (6) of the optical device (5).

2.    The arrangement of claim 1, comprising at least one of the features:

the optical detection unit (6) is at least partially transparent;

the microfluidic device (2) has a substantially planar geometry;

the at least one fluid channel (8) has at least one second opening (9',9") opening to the surface of the optical detection unit (6);

the part (7) of the optical detection path (17) is aligned with a longitudinal axis (a-a) of the at least one channel (8);

the part (7') of the optical detection path (17) is arranged substantially normal to the at least one channel (8);

the optical detection unit (6) is applicable for fluorescence, UVNIS, near IR, refractive index (RI) and Raman index optical detection techniques.

3. The arrangement of claim 1 or 2, comprising at least one of the features:

the opening (4) of the at least one first fluid channel (3) of the at least one microfluidic device (2) extends from an surface facing the optical detection unit (6) to an opposing surface of the microfluidic device (2);

the opening (4) extending from the surface facing the optical detection unit (6) to the opposing surface of the microfluidic device (2) is a through hole;

the optical detection unit (6) is an interconnection between a first microfluidic device (2) and a second microfluidic device (12), thus providing fluid communication between the first microfluidic device (2) and the second microfluidic device (12).

4. The arrangement of claim 1 or any one of the above claims, wherein the at least one fluid channel (8) of the optical detection unit (5) is in fluid communication with at least one second fluid hannel (3') having an opening (4') being comprised in the first microfluidic device (2) in that the at least one second opening (9') of the at least one channel (8) is coupled with the opening (4') of the at least one second channel (3').

5. The arrangement of claim 1 or any one of the above claims, comprising at least one of the features:
wherein the microfluidic arrangement (2) comprises a polymer device, in particular a Kapton® substrate;
the microfluidic device (2) has a surface at least partially provided with a coating (19) suppressing foreign radiation, in particular foreign radiation caused by the material of the microfluidic device (2);
the optical detection unit (6) is made of quartz, fused silica, glass, borosilicate glass or any material suitable to constitute an optical detection unit (6);
the optical device (5) comprises at least one of a light emitting source and a light receiver.

6. The arrangement of claim 1 or any one of the above claims, wherein the optical device (5) comprises at least one of a light emitting source and a light receiver, and the optical device (5) comprises at least one optical coupling device (10,10') directing the light emitted by the light emitting source into the microfluidic device (2) or the light coming from the optical detection unit (6) into the light receiver.

7. The arrangement of claim 6, comprising at least one of the features:

the at least one optical coupling device (10) is detachably coupled adjacent to the at least one microfluidic device (2) and provides a part of an extension of the optical detection path (17);

at least one optical coupling device (10') is detachably coupled adjacent to the optical detection unit (6) and provides a part of an extension of the optical detection path (17).

the optical detection unit (6) is a spacer being a component providing an extension of the optical detection path (17) between the microfluidic device (2) and the optical coupling device (10').

the optical detection unit (6) is a spacer being a component providing an extension of the optical detection path (17) between the microfluidic device (2) and the optical coupling device (10'), and the at least one fluid channel (8) of the spacer has an opening (9") facing the coupling device (10').

8. The arrangement of claim 1 or any one of the above claims, comprising at least one of the features:
wherein the opening (4) is extending from the surface facing the optical detection unit (6) to the opposing surface of the microfluidic device (2) is a through hole, and the opening (9"), the first opening (9) and the through hole of the microfluidic device (2) are coaxially arranged with respect to an axis (b-b);
wherein the optical device (5) comprises the optical detection unit (6), the optical coupling devices (10, 10'), the light receiver (27), the light emitting device (26); and wherein a high pressure proof sealing (20) is providing an adhesion between at least one of the compounds constituting the optical device (5) and the microfluidic device (2);
the optical detection unit (6) is positioned to the microfluidic device (2) by position holders;
the optical detection unit (6) is positioned to the microfluidic device (2) by position holders, and the position holders (11) comprise pins.

9.  A method for optically detecting fluids (25) of using the device of claim 1 microfluidic arrangement (1) of claim 1 or any one of the above claims, the method comprising
operatively and detachably coupling the microfluidic device (2) with the optical detection unit (6) of the optical device (5), thus extending the part of the optical detection path (17).

10. The method of claim 9, comprising at least one of the features:

   a fluid flowing through the at least one fluid channel (8) of the optical detection unit (6) is directed into a second microfluidic device (12) via a second opening (9') of the at least one channel (8), which is in fluid communication with an opening (14) of the at least one channel (13) of the second microfluidic device (12);
   fluid flowing through the at least one channel (8) of the optical detection unit (6) is directed back into the first microfluidic device (2) via the second opening (9') comprised in the at least one channel (8)being in fluid communication with an opening (4') of the at least one second channel (3') of the first microfluidic device (2);
   the microfluidic device (2) is detached from the optical device (4) after detection;
   light is coupled into the optical device (4);
   the light is directed in at least one of the following: along a longitudinal axis (a-a) of the optical device (4), normal to the at least one channel (8) comprised in the optical device (4), through at least one optical coupling device (10) being detachably fixed adjacent to the at least one microfluidic device (2) through an at least one optical coupling device (10') being detachably fixed adjacent to the optical detection unit (6).

11. The method of claim 9 or 10, comprising at least one of the features:

   introducing a spacer between the microfluidic device (2) and the optical coupling device (10'), extending the optical detection path (17);
   light is emitted from a light emitting source (26) and directed via the optical coupling device (10) along the axis (b-b) to a light receiver (27);
   at least partially the covering of the microfluidic device (2) with a surface coating (19) suppressing the self-radiation of the microfluidic device (2).

**Patentansprüche**

1.  Mikrofluidanordnung (1), die aufweist:

   mindestens eine Mikrofluideinheit (2), die mindestens einen ersten Fluidkanal (3) mit einer Öffnung (4) zu einer Oberfläche der Mikrofluideinheit (2) hin aufweist,
   eine optische Detektionseinheit (6) einer optischen Einheit (5), die mindestens einen Teil (7, 7') eines optischen Detektionspfades (17) bereitstellt und mindestens einen Fluidkanal (8) mit einer ersten Öffnung (9) aufweist, die zu einer Oberfläche der optischen Detektionseinheit (6) hin offen ist,

   wobei die Oberfläche der optischen Detektionseinheit (6) der Oberfläche der Mikrofluideinheit (2) gegenüber liegt, wenn die mindestens eine Mikrofluideinheit (2) funktionell mit der optischen Einheit (5) verbunden ist, sodass der mindestens eine Kanal (8) der optischen Detektionseinheit (6) über eine Flüssigkeit mit dem mindestens einen ersten Kanal (3) der Mikrofluideinheit (2) in Verbindung steht, indem die Öffnung (4) des mindestens einen ersten Kanals (3) mit der ersten Öffnung (9) des mindestens einen Kanals (8) verbunden wird,
   **dadurch gekennzeichnet, dass**
   die mindestens eine Mikrofluideinheit (2) mit der optischen Detektionseinheit (6) der optischen Einheit (5) trennbar verbunden ist.

2.  Anordnung nach Anspruch 1, die mindestens eines der folgenden Merkmale aufweist:

   die optische Detektionseinheit (6) ist zumindest teilweise transparent;
   die Mikrofluideinheit (2) weist eine im Wesentlichen ebene Geometrie auf;
   der mindestens eine Fluidkanal (8) weist mindestens eine zweite Öffnung (9', 9'') auf, die zur Oberfläche der optischen Detektionseinheit (6) hin offen ist;
   der Teil (7) des optischen Detektionspfades (17) ist auf eine Längsachse (a-a) des mindestens einen Kanals (8) ausgerichtet;
   der Teil (7') des optischen Detektionspfades (17) ist im Wesentlichen senkrecht zu dem mindestens einen Kanal (8) angeordnet;
die optische Detektionseinheit (6) kann für optische Detektionsverfahren mittels Fluoreszenz-, UV/VIS-, Nahinfrarot-, Brechungsindex- und Raman-Indexmessung eingesetzt werden.

**3.** Anordnung nach Anspruch 1 oder 2, die mindestens eines der Merkmale aufweist:

die Öffnung (4) des mindestens einen ersten Fluidkanals (3) der mindestens einen Mikrofluideinheit (2) erstreckt sich von einer Oberfläche, die der optischen Detektionseinheit (6) gegenüber liegt, bis zu einer gegenüber liegenden Oberfläche der Mikrofluideinheit (2);
die Öffnung (4), die sich von der der optischen Detektionseinheit (6) gegenüber liegenden Oberfläche bis zu der gegenüber liegenden Oberfläche der Mikrofluideinheit (2) erstreckt, ist eine Durchgangsbohrung;
die optische Detektionseinheit (6) bildet eine Verbindung zwischen einer ersten Mikrofluideinheit (2) und einer zweiten Mikrofluideinheit (12) und sorgt somit für eine Flüssigkeitsverbindung zwischen der ersten Mikrofluideinheit (2) und der zweiten Mikrofluideinheit (12).

**4.** Anordnung nach Anspruch 1 oder irgendeinem der vorhergehenden Ansprüche, wobei der mindestens eine Fluidkanal (8) der optischen Detektionseinheit (5) über Flüssigkeit mit mindestens einem zweiten Fluidkanal (3') in Verbindung steht, der eine Öffnung (4') aufweist, welche insofern in der ersten Mikrofluideinheit (2) enthalten ist, als die mindestens eine zweite Öffnung (9') des mindestens einen Kanals (8) mit der Öffnung (4') des mindestens einen zweiten Kanals (3') verbunden ist.

**5.** Anordnung nach Anspruch 1 oder irgendeinem der vorhergehenden Ansprüche, die mindestens eines der Merkmale aufweist:

die Mikrofluidanordnung (2) weist eine Polymereinheit, insbesondere ein Kapton®-Substrat, auf;
die Mikrofluideinheit (2) weist eine Oberfläche auf, die zumindest teilweise mit einer Beschichtung (19) zum Unterdrücken von Fremdstrahlung, insbesondere durch das Material der Mikrofluideinheit (2) verursachter Fremdstrahlung, versehen ist;
die optische Detektionseinheit (6) ist aus Quarz, Quarzglas, Glas, Borosilikatglas oder einem beliebigen anderen zum Aufbau einer optischen Detektionseinheit (6) geeigneten Material gefertigt;
die optische Einheit (5) weist mindestens eine Lichtemissionsquelle und einen Lichtempfänger auf.

**6.** Anordnung nach Anspruch 1 oder irgendeinem der vorhergehenden Ansprüche, wobei die optische Einheit (5) mindestens eine Lichtemissionsquelle und einen Lichtempfänger aufweist und wobei die optische Einheit (5) mindestens eine optische Kopplungseinheit (10, 10') aufweist, welche das von der Lichtemissionsquelle emittierte Licht in die Mikrofluideinheit (2) oder das von der optischen Detektionseinheit (6) kommende Licht in den Lichtempfänger leitet.

**7.** Anordnung nach Anspruch 6, die mindestens eines der Merkmale aufweist:

die mindestens eine optische Kopplungseinheit (10) ist direkt mit der mindestens einen Mikrofluideinheit (2) trennbar verbunden und stellt einen Teil einer Verlängerung des optischen Detektionspfades (17) dar;
mindestens eine optische Kopplungseinheit (10') ist direkt mit der optischen Detektionseinheit (6) trennbar verbunden und stellt einen Teil einer Verlängerung des optischen Detektionspfades (17) dar;
die optische Detektionseinheit (6) stellt ein Bauteil dar, das als Abstandshalter für eine Verlängerung des optischen Detektionspfades (17) zwischen der Mikrofluideinheit (2) und der optischen Kopplungseinheit (10') sorgt;
die optische Detektionseinheit (6) stellt ein Bauteil dar, das als Abstandshalter für eine Verlängerung des optischen Detektionspfades (17) zwischen der Mikrofluideinheit (2) und der optischen Kopplungseinheit (10') sorgt, und der mindestens eine Fluidkanal (8) des Abstandshalters weist eine Öffnung (9") auf, die der Kopplungseinheit (10') gegenüber liegt.

**8.** Anordnung nach Anspruch 1 oder irgendeinem der vorhergehenden Ansprüche, die mindestens eines der Merkmale aufweist:

die Öffnung (4), die sich von der Oberfläche, welche der Oberfläche der optischen Detektionseinheit (6) gegenüber liegt, bis zur gegenüber liegenden Oberfläche der Mikrofluideinheit (2) erstreckt, ist eine Durchgangsbohrung, und die Öffnung (9"), die erste Öffnung (9) und die Durchgangsbohrung der Mikrofluideinheit (2) sind koaxial in Bezug auf eine Achse (b-b) ausgerichtet;

die optische Einheit (5) weist die optische Detektionseinheit (6), die optischen Kopplungseinheiten (10, 10'), den Lichtempfänger (27) und die Lichtemissionseinheit (26) auf; wobei eine hochdruckbeständige Dichtung (20) für eine Haftung zwischen mindestens einer der Zusammensetzungen sorgt, aus denen die optische Einheit (5) und die Mikrofluideinheit (2) bestehen;

die optische Detektionseinheit (6) wird durch Positionshalterungen an der Mikrofluideinheit (2) positioniert;

die optische Detektionseinheit (6) wird durch Positionshalterungen an der Mikrofluideinheit (2) positioniert, und die Positionshalterungen (11) weisen Führungsstifte auf.

9. Verfahren zum optischen Detektieren von Flüssigkeiten (25) unter Verwendung der Mikrofluidanordnung (1) nach Anspruch 1 oder irgendeinem der vorhergehenden Ansprüche, wobei das Verfahren aufweist:

funktionelles und trennbares Verbinden der Mikrofluideinheit (2) mit der optischen Detektionseinheit (6) der optischen Einheit (5) und somit Verlängern des Teils des optischen Detektionspfades (17).

10. Verfahren nach Anspruch 9, das mindestens eines der Merkmale aufweist:

eine durch den mindestens einen Fluidkanal (8) der optischen Detektionseinheit (6) fließende Flüssigkeit wird durch eine zweite Öffnung (9') des mindestens einen Kanals (8), die über eine Flüssigkeit in Verbindung mit einer Öffnung (14) des mindestens einen Kanals (13) der zweiten Mikrofluideinheit (12) steht, in die zweite Mikrofluideinheit (12) geleitet;

eine durch den mindestens einen Kanal (8) der optischen Detektionseinheit (6) fließende Flüssigkeit wird durch eine zweite Öffnung (9'), die in dem mindestens einen Kanal (8) enthalten ist und über eine Flüssigkeit in Verbindung mit einer Öffnung (4') des mindestens einen zweiten Kanals (3') der ersten Mikrofluideinheit (2) steht, in die erste Mikrofluideinheit (2) zurückgeleitet;

die Mikrofluideinheit (2) wird nach der Detektion von der optischen Einheit (4) getrennt;

Licht wird in die optische Einheit (4) eingekoppelt;

das Licht wird durch mindestens eines der folgenden Bauteile geführt: entlang einer Längsachse (a-a) der optischen Einheit (4), die senkrecht zu dem mindestens einen in der optischen Einheit (4) enthaltenen Kanal (8) steht, durch mindestens eine optische Kopplungseinheit (10), die durch mindestens eine direkt mit der optischen Detektionseinheit (6) trennbar verbundene optische Kopplungseinheit (10') direkt mit der mindestens einen Mikrofluideinheit (2) trennbar verbunden ist.

11. Verfahren nach Anspruch 9 oder 10, das mindestens eines der Merkmale aufweist:

Einsetzen eines Abstandshalters zwischen die Mikrofluideinheit (2) und die optische Kopplungseinheit (10'), der den optischen Detektionspfad (17) verlängert;

Licht wird von einer Lichtemissionsquelle (26) emittiert und durch die optische Kopplungseinheit (10) entlang der Achse (b-b) zu einem Lichtempfänger (27) geleitet;

zumindest teilweises Beschichten der Mikrofluideinheit (2) mit einer Oberflächenbeschichtung (19) zum Unterdrücken der Eigenstrahlung der Mikrofluideinheit (2).

**Revendications**

1. Montage microfluidique (1) comprenant :

au moins un dispositif microfluidique (2) comportant au moins un premier canal d'écoulement de fluide (3) pourvu d'une ouverture (4) vers une surface du dispositif microfluidique (2) ;

une unité de détection optique (6) d'un dispositif optique (5) fournissant au moins une partie (7,7') d'un trajet de détection optique (17) et comprenant au moins un canal d'écoulement de fluide (8) pourvu d'une première ouverture (9) s'ouvrant vers une surface de l'unité de détection optique (6) ;

dans lequel la surface de l'unité de détection optique (6) est tournée vers la surface du dispositif microfluidique (2) lorsque le au moins un dispositif microfluidique (2) est couplé en fonctionnement au dispositif optique (5), de sorte que le au moins un canal (8) de l'unité de détection optique (6) soit en communication par fluide avec le au moins un premier canal (3) du dispositif microfluidique (2) en raccordant l'ouverture (4) du au moins un premier canal (3) à la première ouverture (9) du au moins un canal (8), **caractérisé en ce que** le au moins un dispositif microfluidique (2) est couplé de manière détachable à l'unité de détection optique (6) du dispositif optique (5).

2. Montage suivant la revendication 1, comprenant au moins une des particularités suivantes :

l'unité de détection optique (6) est au moins partiellement transparente ;
la géométrie du dispositif microfluidique (2) est en grande partie plane ;
le au moins un canal d'écoulement de fluide (8) comporte au moins une deuxième ouverture (9', 9") s'ouvrant vers la surface de l'unité de détection optique (6) ;
la partie (7) du trajet de détection optique (17) est alignée sur un axe longitudinal (a-a) du au moins un canal (8) ;
la partie (7') du trajet de détection optique (17) est agencée de manière en grande partie normale par rapport au au moins un canal (8) ;
l'unité de détection optique (6) est applicable aux techniques de détection optique par fluorescence, spectrométrie UV/Visible, proche infrarouge, indice de réfraction et indice de Raman.

3. Montage suivant la revendication 1 ou 2, comprenant au moins une des particularités suivantes :

l'ouverture (4) du au moins un premier canal d'écoulement de fluide (3) du au moins un dispositif microfluidique (2) s'étend depuis une surface tournée vers l'unité de détection optique (6) vers une surface opposée du dispositif microfluidique (2) ;
l'ouverture (4) s'étendant depuis la surface tournée vers l'unité de détection optique (6) vers la surface opposée du dispositif microfluidique (2) est un orifice de passage ;
l'unité de détection optique (6) est une interconnexion entre un premier dispositif microfluidique (2) et un deuxième dispositif microfluidique (12), permettant ainsi une communication par fluide entre le premier dispositif microfluidique (2) et le deuxième dispositif microfluidique (12).

4. Montage suivant la revendication 1 ou suivant l'une quelconque des revendications précédentes, dans lequel le au moins un canal d'écoulement de fluide (8) de l'unité de détection optique (5) est en communication par fluide avec au moins un deuxième canal d'écoulement de fluide (3') comportant une ouverture (4') comprise dans le premier dispositif microfluidique (2) en ce que la au moins deuxième ouverture (9') du au moins un canal (8) est raccordée à l'ouverture (4') du au moins deuxième canal (3').

5. Montage suivant la revendication 1 ou suivant l'une quelconque des revendications précédentes, comprenant au moins une des particularités suivantes :

dans lequel le montage microfluidique (2) comprend un dispositif polymère, en particulier un substrat en Kapton® ;
le dispositif microfluidique (2) comporte une surface au moins partiellement pourvue d'un revêtement (19) supprimant tout rayonnement étranger, en particulier un rayonnement étranger dû au matériau du dispositif microfluidique (2) ;
l'unité de détection optique (6) est faite de quartz, de silice fondue, de verre, de verre borosilicaté ou de tout matériau approprié pour former une unité de détection optique (6) ;
le dispositif optique (5) comprend au moins une source d'émission de lumière et un récepteur de lumière.

6. Montage suivant la revendication 1 ou suivant l'une quelconque des revendications précédentes, dans lequel le dispositif optique (5) comprend au moins une source d'émission de lumière et un récepteur de lumière, et le dispositif optique (5) comprend au moins un dispositif de couplage optique (10, 10') dirigeant la lumière émise par la source d'émission de lumière dans le dispositif microfluidique (2) ou la lumière provenant de l'unité de détection optique (6) dans le récepteur de lumière.

7. Montage suivant la revendication 6, comprenant au moins une des particularités suivantes :

le au moins un dispositif de couplage optique (10) est couplé de manière détachable à côté du au moins un dispositif microfluidique (2) et fournit une partie d'une extension du trajet de détection optique (17) ;
au moins un dispositif de couplage optique (10') est couplé de manière détachable à côté de l'unité de détection optique (6) et fournit une partie d'une extension du trajet de détection optique (17) ;
l'unité de détection optique (6) est une pièce d'écartement formant un composant fournissant une extension du trajet de détection optique (17) entre le dispositif microfluidique (2) et le dispositif de couplage optique (10') ;
l'unité de détection optique (6) est une pièce d'écartement formant un composant fournissant une extension du trajet de détection optique (17) entre le dispositif microfluidique (2) et le dispositif de couplage optique (10'), et le au moins un canal d'écoulement de fluide (8) de la pièce d'écartement comporte une ouverture (9") tournée vers le dispositif de couplage (10').

**8.** Montage suivant la revendication 1 ou suivant l'une quelconque des revendications précédentes, comprenant au moins une des particularités suivantes :

dans lequel l'ouverture (4) s'étendant depuis la surface tournée vers l'unité de détection optique (6) vers la surface opposée du dispositif microfluidique (2) est un orifice de passage, et l'ouverture (9"), la première ouverture (9) et l'orifice de passage du dispositif microfluidique (2) sont disposés de manière coaxiale par rapport à un axe (b-b) ;

dans lequel le dispositif optique (5) comprend l'unité de détection optique (6), les dispositifs de couplage optique (10, 10'), le récepteur de lumière (27), le dispositif d'émission de lumière (26), et dans lequel un joint d'étanchéité résistant aux hautes pressions (20) assure une adhérence entre au moins un des composés formant le dispositif optique (5) et le dispositif microfluidique (2) ;

l'unité de détection optique (6) est positionnée par rapport au dispositif microfluidique (2) par des supports de position ;

l'unité de détection optique (6) est positionnée par rapport au dispositif microfluidique (2) par des supports de position, et les supports de position (11) comprennent des broches.

**9.** Procédé de détection optique de fluides (25) utilisant le montage microfluidique (1) suivant la revendication 1 ou suivant l'une quelconque des revendications précédentes, le procédé comprenant :

le couplage de manière fonctionnelle et détachable du dispositif microfluidique (2) à l'unité de détection optique (6) du dispositif optique (5), étendant ainsi la partie du trajet de détection optique (17).

**10.** Procédé suivant la revendication 9, comprenant au moins une des particularités suivantes :

un fluide circulant à travers le au moins un canal d'écoulement de fluide (8) de l'unité de détection optique (6) est dirigé dans un deuxième dispositif microfluidique (12) par le biais d'une deuxième ouverture (9') du au moins un canal (8), qui est en communication par fluide avec une ouverture (14) du au moins un canal (13) du deuxième dispositif microfluidique (12) ;

un fluide circulant à travers le au moins un canal (8) de l'unité de détection optique (6) est redirigé dans le premier dispositif microfluidique (2) par le biais de la deuxième ouverture (9') comprise dans le au moins un canal (8), qui est en communication par fluide avec une ouverture (4') du au moins deuxième canal (3') du premier dispositif microfluidique (2) ;

le dispositif microfluidique (2) est détaché du dispositif optique (4) après détection ;

la lumière est couplée dans le dispositif optique (4) ;

la lumière est dirigée dans au moins une des directions suivantes : sur un axe longitudinal (a-a) du dispositif optique (4), la normale par rapport au moins un canal (8) compris dans le dispositif optique (4), à travers au moins un dispositif de couplage optique (10) fixé de manière détachable à côté du au moins un dispositif microfluidique (2), à travers au moins un dispositif de couplage optique (10') fixé de manière détachable à côté de l'unité de détection optique (6).

**11.** Procédé suivant la revendication 9 ou 10, comprenant au moins une des particularités suivantes :

l'introduction d'une pièce d'écartement entre le dispositif microfluidique (2) et le dispositif de couplage optique (10'), étendant le trajet de détection optique (17) ;

la lumière est émise par une source d'émission de lumière (26) et dirigée par le biais du dispositif de couplage optique (10) sur l'axe (b-b) jusqu'à un récepteur de lumière (27) ;

la couverture au moins partielle du dispositif microfluidique (2) d'un revêtement de surface (19) supprimant le rayonnement inhérent du dispositif microfluidique (2).

FIG. 1a

FIG. 1b

FIG. 1c

FIG. 1d

FIG. 2

FIG. 3a

FIG 3b

FIG. 3c

FIG. 4a

b

FIG. 4b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6033628 A, Swedberg
- US 6093362 A, Kaltenbach
- US 5571410 A, Swedberg
- US 5500071 A, Kaltenbach
- US 5499503 A
- WO 02103323 A2